# EUROPÄISCHE PATENTSCHRIFT

(11) **EP 2 708 711 B1**
(45) Veröffentlichungstag und Bekanntmachung des Hinweises auf die Patenterteilung: **22.03.2017**
(21) Anmeldenummer: 13180044.3
(22) Anmeldetag: 12.08.2013
(51) Int. Cl.: F01N 5/02, F01N 3/04, F28D 7/02, F28F 1/36, F28D 21/00, F28F 1/24, F02M 26/28, F02M 26/32

(54) **Abgaswärmeübertrager**
Exhaust gas heat exchanger
Échangeur de chaleur de gaz d'échappement

(30) Priorität: 14.09.2012 DE 102012216448
(43) Veröffentlichungstag der Anmeldung: 19.03.2014
(73) Patentinhaber: Eberspächer Exhaust Technology GmbH & Co. KG, 66539 Neunkirchen (DE)
(72) Erfinder: Birgler, Markus, 73249 Wernau (DE); Egger, Rouven, 71032 Böblingen (DE); Gaiser, Gerd, 72768 Reutlingen (DE); Feuerbach, Matthias, 73734 Esslingen (DE); Schweizer, Jürgen, 70197 Stuttgart (DE); Hartmann, Marc, 72108 Rottenburg a.N. (DE); Penner, Dimitri, 89079 Ulm (DE); Frobenius, Fabian, 73728 Esslingen (DE)
(74) Vertreter: BRP Renaud & Partner mbB Rechtsanwälte Patentanwälte Steuerberater

(56) Entgegenhaltungen:
- WO-A1-2011/153179
- DE-A1-102008 014 169
- DE-A1-102009 041 773
- DE-A1-102010 055 915
- JP-A- 2010 091 128
- US-A- 2 508 247
- US-A1- 2005 133 202

## Beschreibung

Die vorliegende Erfindung betrifft einen Wärmeübertrager gemäß dem Oberbegriff des Anpsruchs 1 sowie eine Vorrichtung, die mit einem derartigen Wärmeübertrager ausgestattet ist.

Wärmeübertrager, die eine Übertragung von Wärme zwischen einem ersten Medium und einem zweiten Medium ermöglichen, finden in verschiedenen Bereichen der Technik Verwendung und sind allgemein bekannt. Von besonderer Bedeutung sind dabei Fahrzeuganwendungen, da die Wärmeübertrager hierfür einen kompakten und preiswerten Aufbau benötigen. In Fahrzeugen, die eine Brennkraftmaschine zum Antreiben des Fahrzeugs aufweisen, können mehrere Wärmeübertrager zu Anwendung kommen, beispielsweise in einem oder mehreren Kühlkreisen zum Kühlen eines Motorblocks der Brennkraftmaschine, zum Kühlen von Schmieröl, zum Kühlen von Ladeluft und zum Kühlen von rückgeführtem Abgas.

Um die im Abgas der Brennkraftmaschine enthaltene Wärme besser nutzen zu können, sind Abwärmenutzungsanlagen bekannt, die nach Art eines Rankine-Kreisprozesses, vorzugsweise eines Rankine-Clausius-Kreisprozesses, arbeiten, so dass ein Arbeitsmedium verdampft, expandiert, kondensiert und komprimiert wird, wobei das Expandieren des komprimierten, verdampften und überhitzten Arbeitsmediums zum Erzeugen mechanischer Energie genutzt wird, beispielsweise um einen Generator zur Stromerzeugung anzutreiben. Das Verdampfen des Arbeitsmediums erfolgt dabei mittels eines Verdampfers, der ebenfalls einem Wärmeübertrager entspricht. Dieser Wärmeübertrager bzw. Verdampfer kann beispielsweise auf geeignete Weise in eine Abgasanlage der Brennkraftmaschine integriert sein, um Wärme vom Abgas auf das Arbeitsmedium zum Verdampfen des Arbeitsmediums zu übertragen.

Ein gattungsgemäßer Wärmeübertrager ist aus der US 2005/0133202 A1 bekannt. Er umfasst ein Gehäuse, das ein Rohr enthält und einen Mantel aufweist, der das Rohr unter Ausbildung eines Ringkanals umschließt, einen Primäreinlass und einem Primärauslass, die über einen ein Primärmedium durch den Ringkanal führenden Primärpfad und über einen das Primärmedium durch das Rohr führenden Bypasspfad fluidisch miteinander verbunden sind, eine Steuereinrichtung zum Steuern einer Durchströmung des Primärpfads und des Bypasspfads mit dem Primärmedium und einen Sekundäreinlass und einem Sekundärauslass, die über wenigstens zwei Sekundärpfade zum Führen eines Sekundärmediums fluidisch miteinander verbunden sind, wobei der Primärpfad mit den Sekundärpfaden mediengetrennt wärmeübertragend gekoppelt ist, wobei wenigstens zwei Wendeln im Ringkanal angeordnet sind, die das Rohr schraubenförmig umschlingen und durch die je ein Sekundärpfad hindurchführt, und wobei wenigstens zwei Wendeln im Ringkanal radial übereinander angeordnet sind. Beim bekannten Wärmeübertrager sind zwei oder drei Wendeln in einem einzigen Wendelpaket radial nebeneinander angeordnet.
Aus der US 2 508 247 ist ein Wärmeübertrager bekannt, bei dem drei Wendeln vorgesehen sind, die in zwei axial benachbarten Wendelpakten in entsprechenden Wendelabschnitten radial benachbart angeordnet sind. Dabei ist der radial äußere Wendelabschnitt des ersten Wendelpaktes mit dem radial inneren Wendelabschnitt des zweiten Wendelpaktes verbunden, während der radial innere Wendelabschnitt des ersten Wendelpakets mit dem radial äußeren Wendelabschnitt des zweiten Wendelpaktes verbunden ist. Ferner ist beim bekannten Wärmeübertrager der mittlere Wendelabschnitt des ersten Wendelpaketes mit dem mittleren Wendelabschnitt des zweiten Wendelpaktes verbunden.
Die WO 2011/153179 A1 zeigt einen Wärmeübertrager, bei dem zwei Wendeln in einem einzigen Wendelpaket angeordnet sind, wobei die beiden Wendeln separaten Sekundärfluiden zugeordnet sind.
Die JP 2010-91128 A zeigt einen Wärmeübertrager, bei dem zwei Wendeln axial nebeneinander bzw. axial ineinander angeordnet sind.
Die DE 10 2009 041 773 A1 zeigt einen Wärmeübertrager mit einem einzelnen Wendelpaket, in dem drei Wendeln radial benachbart angeordnet sind.
Aus der DE 10 2008 014 169 A1 und der DE 10 2010 055 915 A1 sind Wärmeübertrager bekannt, die ohne Wendeln arbeiten.

Die vorliegende Erfindung beschäftigt sich mit dem Problem, für einen Wärmeübertrager der vorstehend beschriebenen Art bzw. für eine damit ausgestattete Vorrichtung eine verbesserte Ausführungsform anzugeben, die sich insbesondere durch eine effiziente Wärmeübertragung bei kompakter Bauform auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Wärmeübertrager, der für ein Primärmedium einen Primärpfad aufweist, der einen Primäreinlass und einen Primärauslass miteinander verbindet, für ein Sekundärmedium zumindest zwei separate Sekundärpfade vorzusehen, die parallel einen gemeinsamen Sekundäreinlass mit einem gemeinsamen Sekundärauslass fluidisch miteinander verbinden. Durch die Bereitstellung von zumindest zwei parallel vom Sekundärmedium durchströmbaren Sekundärpfaden, die beide mediengetrennt mit dem Primärpfad wärmeübertragend gekoppelt sind, lässt sich der Durchströmungswiderstand des Wärmeübertragers für das Sekundärmedium reduzieren, so dass insgesamt ein größerer Volumenstrom mit ausreichender Verweildauer des Sekundärmediums im Wärmeübertrager realisierbar ist. Insgesamt lässt sich dadurch eine erhöhte Effizienz für die Wärmeübertragung zwischen Primärmedium und Sekundärmedium erzielen, wobei gleichzeitig eine kompakte Bauweise realisierbar ist.

Besonders vorteilhaft lässt sich der so geschaffene Wärmeübertrager als Verdampfer nutzen, um ein Arbeitsmedium als Sekundärmedium zu verdampfen. Der Wärmeübertrager lässt sich hierzu beispielsweise in eine abgasführende Leitung einer Brennkraftmaschine einbinden, derart, dass das Abgas das Primärmedium bildet. Das Abgas einer Brennkraftmaschine kann - je nach Betriebszustand der Brennkraftmaschine - eine sehr hohe Temperatur erreichen, so dass mit Hilfe des hier vorgestellten Wärmeübertragers dem Abgas viel Wärme zum Verdampfen des Arbeitsmediums entzogen werden kann. Mit Hilfe des hier vorgestellten Wärmeübertragers lässt sich dies besonders effizient und bei kompakter Bauweise realisieren, da die wenigstens zwei Sekundärpfade parallel vom zu verdampfenden Sekundärmedium bzw. Arbeitsmedium durchströmt werden, so dass parallel die Wärme aufgenommen werden kann.

Im Einzelnen schlägt die Erfindung zur Realisierung des Wärmeübertragers gemäß einer bevorzugten Ausführungsform eine Art Rohrbauweise vor, bei welcher ein Gehäuse ein Rohr enthält und einen Mantel aufweist, der das Rohr unter Ausbildung eines Ringkanals umschließt. Der Primärpfad ist durch den Ringkanal geführt, während durch das Rohr ein Bypasspfad hindurchgeführt ist, der unter Umgehung des Ringkanals ebenfalls den Primäreinlass mit dem Primärauslass fluidisch miteinander verbindet. Des Weiteren wird eine Steuereinrichtung vorgeschlagen, mit deren Hilfe eine Durchströmung des Primärpfads und des Bypasspfads mit dem Primärmedium gesteuert werden kann. Die wenigstens zwei Sekundärpfade sind ebenfalls durch den Ringkanal geführt, derart, dass sie im Ringkanal mit dem Primärpfad mediengetrennt und wärmeübertragend gekoppelt sind. Durch diese Bauweise erfolgt die Wärmeübertragung zwischen dem Primärmedium und dem Sekundärmedium ausschließlich im Ringkanal, so dass nur bei einer Durchströmung des Ringkanals mit Primärmedium eine aktive Wärmeübertragung auf das Sekundärmedium erfolgt. Primärmedium, das durch den Bypasspfad strömt, umgeht diese wärmeübertragende Kopplung zwischen dem Primärpfad und den Sekundärpfaden und kann bestenfalls zu einer, z.B. auf der Aufheizung des Gehäuses durch den Abgasstrom beruhenden, passiven Wärmeübertragung auf das Sekundärmedium führen. Mit Hilfe der Steuereinrichtung lässt sich nun das Primärmedium steuern, so dass es entweder nur durch den Primärpfad, also durch den Ringkanal oder nur durch den Bypasspfad, also durch das Rohr strömt. Gemäß einer bevorzugten Ausführungsform der Steuereinrichtung kann auch wenigstens eine Zwischenstellung einstellbar sein, bei welcher das Primärmedium sowohl durch den Primärpfad als auch durch den Bypasspfad strömt, wodurch die Wärmemenge, die auf das Sekundärmedium übertragen werden kann, gesteuert werden kann. Die hier vorgestellte Rohrbauweise, bei welcher das Rohr und der Mantel runde Querschnitte besitzen und sich zylindrisch erstrecken, ermöglicht primärseitig relativ hohe Drücke, wodurch eine Verwendung des Wärmeübertragers primärseitig im Abgasstrom erleichtert ist.

Die hier vorgestellte Bauform des Wärmeübertragers zeichnet sich durch eine extrem kompakte Geometrie und einen preiswert realisierbaren Aufbau aus.

Zweckmäßig kann das gemeinsame Gehäuse so konzipiert sein, dass es nur einen gemeinsamen Sekundäreinlass und nur einen gemeinsamen Sekundärauslass für die wenigstens zwei Sekundärpfade aufweist. In der Folge kann dasselbe Sekundärmedium auf die wenigstens zwei Sekundärpfade verteilt werden, so dass es parallel durch die Sekundärpfade strömt. Hierdurch lässt sich der insgesamt für das Sekundärmedium zur Verfügung stehende durchströmbare Querschnitt signifikant vergrößern, wodurch der Strömungswiderstand für das Sekundärmedium und damit einhergehend ein Druckverlust bei der Durchströmung des Wärmeübertragers reduziert werden kann.

Erfindungsgemäß sind wenigstens zwei Wendeln vorgesehen, die im Ringkanal angeordnet sind, die das Rohr schraubenförmig umschlingen und durch die je ein Sekundärpfad hindurchführt. Die Verwendung derartiger Wendeln realisiert für das Sekundärmedium relativ lange Sekundärpfade, wodurch relativ große Verweildauern innerhalb des Wärmeübertragers bzw. innerhalb des Ringkanals realisierbar sind, was eine intensive Wärmeübertragung begünstigt. Derartige Wendeln können innen wie außen ebenfalls relativ hohen Drücken ausgesetzt werden, was die Verwendung des Wärmeübertragers primärseitig in einem Abgasstrom und sekundärseitig z.B. in einem Abwärmenutzungskreis vereinfacht.

Um die Wärmeübertragung zwischen Primärmedium und Sekundärmedium zu verbessern, kann gemäß einer vorteilhaften Ausführungsform jede Wendel ein Wendelrohr aufweisen, das innen das Sekundärmedium führt und außen dem Primärmedium ausgesetzte Kühlrippen trägt. Derartige Kühlrippen können beispielsweise mittels einer Vielzahl von scheibenförmigen Elementen realisiert sein, die auf die Rohrwendel aufgepresst oder damit verlötet oder verschweißt sind. Ebenso können derartige Kühlrippen mittels wenigstens eines schraubenförmigen Bandelements realisiert sein, das schraubenförmig das jeweilige Wendelrohr umhüllt.

Erfindungsgemäß sind die wenigstens zwei Wendeln im Ringkanal radial übereinander oder aufeinander angeordnet. Durch diese Bauweise lässt sich der Wärmeübertrager in der Axialrichtung extrem kompakt realisieren. Durch das Anordnen der Wendeln radial über- bzw. aufeinander, sind innenliegende Schlingen vorhanden, die zu einer innenliegenden Wendel oder zu einem innenliegenden Wendelabschnitt gehören und die zum Rohr direkt beabstandet sind, während zwischen diesen innenliegenden Schlingen und dem Mantel andere Schlingen einer anderen Wendel bzw. eines anderen Wendelabschnitts angeordnet sind. Ebenso existieren außenliegende Schlingen, die zu einer außenliegenden Wendel oder zu einem außenliegenden Wendelabschnitt gehören und die zum Mantel direkt benachbart sind, während zwischen diesen außenliegenden Schlingen und dem Rohr Schlingen einer anderen Wendel bzw. eines anderen Wendelabschnitts angeordnet sind.

Für den Fall, dass genau zwei Wendeln vorgesehen sind, sind die innenliegenden Schlingen direkt benachbart zum Rohr und über die außenliegenden Schlingen indirekt benachbart zum Mantel angeordnet, während die außenliegenden Schlingen direkt benachbart zum Mantel und über die innenliegenden Schlingen indirekt benachbart zum Rohr angeordnet sind. Bei drei oder mehr Wendeln, die radial übereinander bzw. aufeinander angeordnet sind, existieren zu den innenliegenden Schlingen und den außenliegenden Schlingen zusätzlich weitere zwischenliegende Schlingen, die in wenigstens einer Zwischenlage angeordnet sind, die sich zwischen den innenliegenden Schlingen und den außenliegenden Schlingen befindet.

Erfindungsgemäß bilden die wenigstens zwei Wendeln jeweils wenigstens zwei axial benachbarte Wendelpakete, in denen von jeder Wendel ein mehrere Schlingen umfassender Wendelabschnitt verläuft. Innerhalb desselben Wendelpakets ist eine radiale Position der Schlingen des jeweiligen Wendelabschnitts gleich. Allerdings sind die radialen Positionen der Schlingen derselben Wendeln in den benachbarten Wendelpaketen verschieden. Bei einer Ausführungsform mit nur zwei Wendeln bedeutet dies beispielsweise, dass zumindest zwei axial benachbarte Wendelpakete vorhanden sind, in denen jeweils zwei Wendelabschnitte radial übereinander angeordnet sind. Innerhalb des ersten Wendelpakets bilden die innenliegenden Schlingen einen ersten Wendelabschnitt der ersten Wendel, während die außenliegenden Schlingen einen ersten Wendelabschnitt der zweiten Wendel bilden. Im zweiten Wendelpaket bilden dagegen die innenliegenden Schlingen einen zweiten Wendelabschnitt der zweiten Wendel, während die außenliegenden Schlingen einen zweiten Wendelabschnitt der ersten Wendel bilden. Somit besitzt jede Wendel einen innenliegenden Wendelabschnitt mit innenliegenden Schlingen und einen außenliegenden Wendelabschnitt mit außenliegenden Schlingen. Somit werden die radialen Positionen der Schlingen derselben Wendel von Wendelpaket zu Wendelpaket variiert. Durch diese Bauweise lässt sich insgesamt eine Homogenisierung der Wärmeübertragung vom Primärmedium auf das Sekundärmedium realisieren. Diese Bauweise beruht auf der Erkenntnis, dass bei radial übereinander angeordneten Wendeln eine weiter außenliegende Wendel einen längeren Sekundärpfad realisiert als eine weiter innenliegende Wendel, wodurch es zu unterschiedlichen Aufenthaltsdauern des Sekundärmediums im Wärmeübertrager kommt, wodurch unterschiedliche Wärmeaufnahmen von den unterschiedlichen Sekundärpfaden realisiert werden. Durch ein Wechseln der radialen Positionen der Schlingen, die zur selben Wendel und somit zum selben Sekundärpfad gehören, lässt sich die Wärmeaufnahme der verschiedenen Sekundärpfade homogenisieren.

Erfindungsgemäß ist vorgesehen, dass für den Fall, dass n der Anzahl der Wendeln entspricht, wenigstens n Wendelpakete vorgesehen sind, in denen jeweils n verschiedene radiale Positionen für die Schlingen möglich sind, wobei dann bei jeder Wendel die Schlingen der Wendelabschnitte jede mögliche radiale Position zumindest einmal einnehmen. Das bedeutet, dass bei genau drei Wendeln, also bei genau drei Sekundärpfaden zumindest drei Wendelpakete vorgesehen sind, in denen jeweils genau drei verschiedene radiale Positionen für die Schlingen möglich sind, nämlich innenliegende Schlingen, außenliegende Schlingen und mittig angeordnete Schlingen. Ferner bedeutet dies, dass bei jeder dieser drei Wendeln in den wenigstens drei Wendelpaketen zumindest ein Wendelabschnitt mit innenliegenden Schlingen, ein Wendelabschnitt mit außenliegenden Schlingen und ein Wendelabschnitt mit mittig angeordneten Schlingen vorgesehen ist.

Bei einer anderen vorteilhaften Weiterbildung kann zwischen benachbarten Wendelpaketen je Wendel ein Verbindungsrohr vorgesehen sein, das einen radial weiter innen liegenden Wendelabschnitt des einen Wendelpakets mit einem radial weiter außen liegenden Wendelabschnitt des anderen Wendelpakets fluidisch verbindet. Hierdurch ist es grundsätzlich möglich, die einzelnen Wendelpakete identisch aufzubauen und mit Hilfe der Verbindungsrohre so miteinander zu verschalten, dass sich die zuvor genannte Anordnung ergibt, bei der die einzelnen Wendelabschnitte derselben radialen Position bei benachbarten Wendelpaketen zu unterschiedlichen Wendeln gehören.

Um diese Verbindungsrohre besonders einfach mit den Wendelrohren fluidisch verbinden zu können, können beispielsweise Verbindungshülsen vorgesehen sein, in welche Endabschnitte der Wendelrohre und der Verbindungsrohre axial einsteckbar sind. Insbesondere lassen sich derartige Verbindungshülsen einfach mit den Verbindungsrohren und den Wendelrohren verlöten.

Gemäß einer anderen vorteilhaften Ausführungsform, die zusätzlich oder alternativ zu den vorstehenden Varianten realisierbar ist, können sich die wenigstens zwei Wendeln durch unterschiedliche Wärmeübertragungsleistungen voneinander unterscheiden. Hierdurch ist es möglich, Wärmeübertragungsunterschiede zwischen einer weiter innenliegenden Wendel bzw. eines weiter innenliegenden Wendelabschnitts und einer weiter außenliegenden Wendel bzw. eines weiter außenliegenden Wendelabschnitts mehr oder weniger auszugleichen.

Beispielsweise können sich die Wendeln durch unterschiedliche durchströmbare Querschnitte voneinander unterscheiden. Insbesondere können die verwendeten Wendelrohre unterschiedliche Strömungsquerschnitte besitzen. Beispielsweise kann eine weiter außenliegende Wendel einen größeren durchströmbaren Querschnitt aufweisen als eine weiter innenliegende Wendel.

Zusätzlich oder alternativ kann vorgesehen sein, dass sich die Wendeln durch unterschiedliche Anzahl an Schlingen voneinander unterscheiden. Die Schlingenzahl definiert die Länge des jeweiligen Sekundärpfads, so dass hierdurch Wendeln mit unterschiedlich langen Sekundärpfaden realisiert werden. Beispielsweise kann eine weiter außenliegende Wendel eine kleinere Anzahl an Schlingen aufweisen als eine weiter innenliegende Wendel. Entsprechendes gilt dann auch für Wendelabschnitte innerhalb eines Wendelpakets.

Zusätzlich oder alternativ kann für Wendeln, die ein Wendelrohr mit Kühlrippen aufweisen, vorgesehen sein, dass sich die Wendeln durch unterschiedliche Größe der Kühlrippen und/oder durch unterschiedliche Anordnungsdichte der Kühlrippen und/oder durch unterschiedliche Geometrie der Kühlrippen und/oder durch unterschiedliche Werkstoffe der Kühlrippen voneinander unterscheiden. Eine unterschiedliche Anordnungsdichte der Kühlrippen entspricht einer unterschiedlichen Anzahl der Kühlrippen je Längeneinheit des Wendelrohrs. Unterschiedliche Werkstoffe der Kühlrippen und/oder der Wendelrohre unterscheiden sich durch unterschiedliche Wärmeleitkoeffizienten. Die unterschiedlichen Gestaltungen und/oder Anordnungen der Kühlrippen beeinflussen signifikant die Wärmeübertragungsleistung der jeweiligen Wendel, so dass hierüber die gewünschte Homogenisierung besonders einfach realisierbar ist.

Ferner kann zusätzlich oder alternativ allgemein vorgesehen sein, dass sich die Wendeln durch unterschiedliche Werkstoffe voneinander unterscheiden. Die unterschiedlichen Werkstoffe charakterisieren sich insbesondere durch unterschiedliche Wärmeleitkoeffizienten.

Bei einer besonderen Ausführungsform können alle Wendeln radial übereinander angeordnet sein, so dass innerhalb der jeweiligen radialen Position axial benachbarte Schlingen zu derselben Wendel gehören. Hierdurch lassen sich insbesondere die vorstehend genannten Wendelpakete besonders einfach realisieren. Bei einer anderen Ausführungsform kann dagegen vorgesehen sein, dass zumindest in einer radial weiter außenliegenden Position wenigstens zwei Wendeln nach Art einer Doppelhelix oder Mehrfachhelix axial ineinander verschlungen angeordnet sind, so dass Schlingen verschiedener Wendeln innerhalb dieser radialen Position axial nebeneinander angeordnet sind. Durch die Verwendung von wenigstens zwei Wendeln in einer radial weiter außenliegenden Position lässt sich dort die Schlingenanzahl gegenüber einer einzigen Wendel zumindest halbieren, wodurch sich auch die Länge des jeweiligen Sekundärpfads entsprechend reduzieren lässt.

Als Materialien für das Gehäuse, insbesondere das Rohr und den Mantel, sowie für die Wendeln, insbesondere für das jeweilige Wendelrohr und für die Kühlrippen, kommen abhängig von den Einsatzbedingungen, bevorzugt Eisenlegierungen zum Einsatz, vorzugsweise Stahl, insbesondere Edelstahl. Ferner können auch Leichtmetalle bzw. Leichtmetalllegierungen zum Einsatz kommen, wie z.B. Aluminium oder Aluminiumlegierungen. Alternativ kann auch Kupfer bzw. eine Kupferlegierung zum Einsatz kommen. Zum Schutz vor aggressivem Abgas können die dem Abgas ausgesetzten Oberflächen auch mit einer, insbeondere keramischen, Schutzbeschichtung ausgestattet sein. Vorzugsweise können Wendeln aus Kupfer außen mit einer solchen Schutzbeschichtung versehen sein.

Eine erfindungsgemäße Vorrichtung, die insbesondere in einem Fahrzeug, und zwar sowohl in einem Landfahrzeug als auch in einem Wasserfahrzeug oder in einem Luftfahrzeug angeordnet sein kann, umfasst eine Brennkraftmaschine, die eine Frischluftanlage zum Zuführen von Frischluft zu Brennräumen der Brennkraftmaschine und eine Abgasanlage zum Abführen von Abgas von den Brennräumen sowie optional eine Abgasrückführanlage zum Rückführen von Abgas von der Abgasanlage zur Frischluftanlage aufweist. Des Weiteren kann eine derartige Vorrichtung mit einer Abwärmenutzungsanlage ausgestattet, die in einem Abwärmenutzungskreis, in dem ein Arbeitsmedium zirkuliert, einen Verdampfer zum Verdampfen des Arbeitsmediums, stromab davon eine Expansionsmaschine zum Entspannen des Arbeitsmediums, stromab davon einen Kondensator zum Kondensieren des Arbeitsmediums und stromab davon eine Fördereinrichtung zum Antreiben des Arbeitsmediums im Abwärmenutzungskreis aufweist. Zusätzlich oder alternativ zu einer derartigen Abwärmenutzungsanlage kann die Vorrichtung mit wenigstens einem Kühlkreis ausgestattet sein, in dem ein Kühlmedium zirkuliert und der beispielsweise zum Kühlen der Brennkraftmaschine dienen kann. Schließlich ist eine derartige Vorrichtung mit mindestens einem Wärmeübertrager der vorstehend beschriebenen Art ausgestattet. Dabei ist dieser Wärmeübertrager so in die Vorrichtung integriert, dass der Primärpfad in die Abgasanlage oder in die Abgasrückführanlage eingebunden ist, so dass das Abgas oder das rückgeführte Abgas das Primärmedium bildet. Die Sekundärpfade können dagegen in den Abwärmenutzungskreis eingebunden sein, derart, dass das Arbeitsmedium das Sekundärmedium bildet. Alternativ können die Sekundärpfade auch in den Kühlkreis eingebunden sein, derart, dass das Kühlmedium das Sekundärmedium bildet. Mit Hilfe des hier vorgestellten Wärmeübertragers lässt sich in dieser Vorrichtung eine besonders effiziente Nutzung bzw. Rückgewinnung der im Abgas bzw. im rückgeführten Abgas mitgeführten Wärme realisieren. Bei einer Verwendung des Wärmeübertragers sekundärseitig im Abwärmenutzungskreis arbeitet der Wärmeübertrager als Verdampfer, während er bei einer sekundärseitigen Verwendung im Kühlkreis als Kühler arbeitet. Im Falle einer Verwendung des Wärmeübertragers als Kühler kommt er primärseitig bevorzugt in der Abgasrückführanlage zum Einsatz, um dort effizient die gewünschte Abkühlung des rückgeführten Abgases zu bewirken.

Bei einer wärmeübertragenden Kopplung der Abgasrückführung mit dem Abwärmenutzungskreis mittels eines derartigen Wärmeübertragers lässt sich ein Motorkühlkreis erheblich entlasten, der zum Kühlen eines herkömmlichen Abgasrückführkühlers dient. Die gesamte Energie, die über den als Verdampfer wirkenden Wärmeübertrager dem Abgas entnommen werden kann, muss nicht mehr vom Motorkühlkreis aufgenommen werden.

Ferner ist es möglich, die Vorrichtung mit zumindest zwei solchen Wärmeübertragern auszustatten, wobei der eine dann primärseitig in der Abgasanlage und der andere dann primärseitig in der Abgasrückführanlage angeordnet sein kann. Sekundärseitig können die beiden Wärmeübertrager unabhängig voneinander verschaltet sein. Ebenso ist denkbar, die beiden Wärmeübertrager sekundärseitig in Reihe zu schalten, beispielsweise um das Arbeitsmedium des Abwärmenutzungskreises in dem zuerst durchströmten Wärmeübertrager zu verdampfen und im anschließend durchströmten Wärmeübertrager zu überhitzen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1 und 2: jeweils eine stark vereinfachte, schaltplanartige Prinzipdarstellung eines Fahrzeugs mit einer einen Wärmeübertrager aufweisenden Vorrichtung bei verschiedenen Ausführungsformen,
- Fig. 3 und 4: jeweils einen stark vereinfachten Längsschnitt durch den Wärmeübertrager bei verschiedenen Betriebszuständen,
- Fig. 5: eine vergrößerte Detailansicht im Längsschnitt des Wärmeübertragers im Bereich mehrerer radial übereinander angeordneter Wendeln bei verschiedenen Ausführungsformen a und b,
- Fig. 6: vereinfachte Schnittansichten eines Verteilerelements a bzw. eines Sammelelements b,
- Fig. 7: ein vereinfachter Längsschnitt durch eine erfindungsgemäße Wendelanordnung mit mehreren Wendelpaketen,
- Fig. 8 und 9: jeweils einen stark vereinfachten Längsschnitt durch den Wärmeübertrager bei weiteren Ausführungsformen,
- Fig. 10: einen vereinfachten Längsschnitt durch den Wärmeübertrager bei einer anderen nicht erfindungsgemäßen Ausführungsform,
- Fig. 11: eine isometrische Ansicht einer Wendelanordnung des Wärmeübertragers aus Fig. 10,
- Fig. 12: eine isometrische auseinander gezogene Darstellung der Wendelanordnung aus Fig. 11,
- Fig. 13: ein vereinfachter Längsschnitt des Wärmeübertragers bei einer weiteren nicht erfindungsgemäßen Ausführungsform,
- Fig. 14: eine isometrische Schnittansicht des Wärmeübertragers im Bereich eines Entkoppelelements,
- Fig. 15: ein vereinfachter Längsschnitt des Wärmeübertragers bei einer weiteren Ausführungsform.

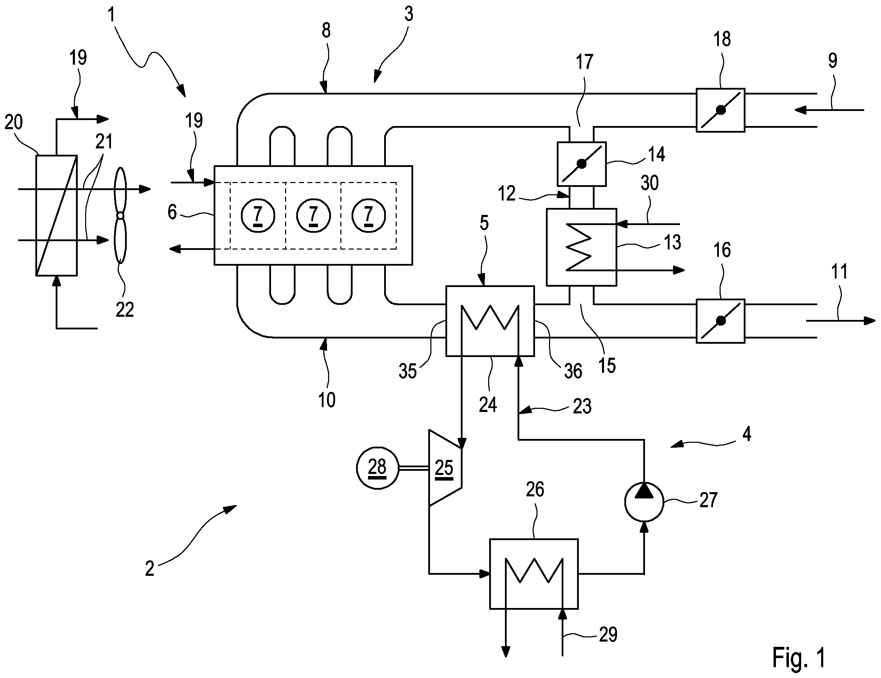

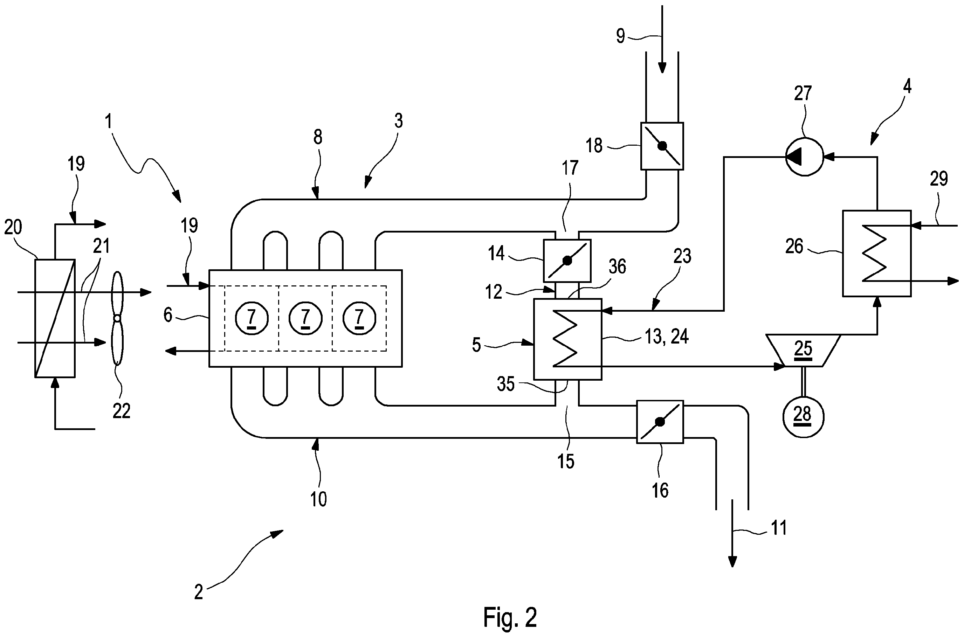

Entsprechend den Figuren 1 und 2 kann ein Fahrzeug 1, bei dem es sich vorzugsweise um ein Landfahrzeug, insbesondere um ein Straßenfahrzeug, handelt, bei dem es sich jedoch ebenfalls um ein Wasserfahrzeug oder um ein Luftfahrzeug handeln kann, eine Vorrichtung 2 aufweisen, die eine Brennkraftmaschine 3 sowie eine Abwärmenutzungsanlage 4 und einen Wärmeübertrager 5 umfasst.

Die Brennkraftmaschine 3 besitzt einen Motorblock 6, der mehrere Brennräume 7 enthält, die in Zylindern ausgebildet und in denen Kolben hubverstellbar angeordnet sind. Die Brennkraftmaschine 3 umfasst des Weiteren eine Frischluftanlage 8 zum Zuführen von Frischluft zu den Brennräumen 7. Ein entsprechender Frischluftstrom ist durch einen Pfeil 9 angedeutet. Die Brennkraftmaschine 3 ist außerdem mit einer Abgasanlage 10 zum Abführen von Abgas von den Brennräumen 7 ausgestattet. Ein entsprechender Abgasstrom ist durch einen Pfeil 11 angedeutet. Bei den hier gezeigten Ausführungsformen ist die Brennkraftmaschine 3 außerdem mit einer Abgasrückführanlage 12 ausgestattet, die zum Rückführen von Abgas von der Abgasanlage 10 zur Frischluftanlage 8 dient. Die Abgasrückführanlage 12 enthält einen Abgasrückführkühler 13 zum Kühlen des rückgeführten Abgases sowie ein Abgasrückführventil 14 zum Steuern der rückgeführten Abgasmenge, also zum Einstellen einer Abgasrückführrate. Zum Verbessern der Abgasrückführung kann die Abgasanlage 10 stromab einer Anschlussstelle 15, in welcher die Abgasrückführanlage 12 an die Abgasanlage 10 angeschlossen ist, eine Staudruckklappe 16 aufweisen. Die Frischluftanlage 8 kann stromauf einer Anschlussstelle 17, in welcher die Abgasrückführanlage 12 an die Frischluftanlage 8 angeschlossen ist, eine Drosselklappe 18 aufweisen.

Zum Kühlen des Motorblocks 6 besitzt die Brennkraftmaschine 3 einen Motor-kühlkreis 19, der entsprechend unterbrochener Linien durch den Motorblock 6 hindurchgeführt ist und der einen Kühler 20 enthält. Der Kühler 20 kann mit einer Kühlluftströmung 21 beaufschlagt bzw. durchströmt werden, die im Fahrbetrieb des Fahrzeugs 1 durch den sogenannten Fahrtwind entsteht und die auch mit Hilfe eines Gebläses 22 erzeugt bzw. verstärkt werden kann.

Die Abwärmenutzungsanlage 4 umfasst einen Abwärmenutzungskreis 23, in dem ein Arbeitsmedium zirkuliert. Die Abwärmenutzungsanlage 4 arbeitet vorzugsweise nach einem Rankine-Clausius-Kreisprozess und enthält in ihrem Abwärmenutzungskreis 23 dementsprechend in der Strömungsrichtung des Arbeitsmediums aufeinanderfolgend einen Verdampfer 24, eine Expansionsmaschine 25, einen Kondensator 26 und eine Fördereinrichtung 27. Der Verdampfer 24 dient zum Verdampfen des Arbeitsmediums. Die Expansionsmaschine 25 dient zum Entspannen des verdampften und vorzugsweise überhitzten Arbeitsmediums, wobei die Expansionsmaschine 25 Wärme und Druck in mechanische Arbeit wandelt, beispielsweise um einen Generator 28 anzutreiben. Der Generator 28 erzeugt elektrische Energie, die beispielsweise in einem geeigneten Energiespeicher, vorzugsweise eine Batterie, gespeichert werden kann. Im Kondensator 26 kann das entspannte Arbeitsmedium kondensiert werden. Hierzu ist der Kondensator 26 an einen Kühlkreis 29 angeschlossen, der insbesondere in den Motorkühlkreis 19 integriert sein kann. Die Fördereinrichtung 27 treibt das Arbeitsmedium im Abwärmenutzungskreis 23 an. Gleichzeitig kann die Fördereinrichtung 27 das flüssige Arbeitsmedium mit einem vergleichsweise hohen Druck beaufschlagen.

Bei der in Figur 1 gezeigten Ausführungsform bildet der Wärmeübertrager 5 den Verdampfer 24, so dass das Abgas ein Primärmedium bildet, das durch den Wärmeübertrager 5 strömt. Das Arbeitsmedium des Abwärmenutzungskreises 23 bildet dabei ein Sekundärmedium, das durch den Wärmeübertrager 5 strömt und darin wärmeübertragend und mediengetrennt mit dem Primärmedium, also mit dem Abgas gekoppelt ist. Ferner ist bei der in Figur 1 gezeigten Ausführungsform der Abgasrückführkühler 13 an einen Kühlkreis 30 angeschlossen, der in den Motorkühlkreis 19 integriert sein kann.

Im Unterschied dazu zeigt Figur 2 eine Ausführungsform, bei welcher der Wärmeübertrager 5 in die Abgasrückführanlage 12 eingebunden ist, derart, dass der Wärmeübertrager 5 in der Abgasrückführanlage 12 den Abgasrückführkühler 13 bildet und in der Abwärmenutzungsanlage 4 den Verdampfer 24 bildet. Somit wird das Primärmedium des Wärmeübertragers 5 in diesem Fall vom rückgeführten Abgas gebildet, während das Sekundärmedium des Wärmeübertragers 5 wieder vom Arbeitsmedium gebildet wird. Bei einer anderen Ausführungsform kann stromab des Wärmeübertragers 5 ein weiterer Wärmeübertrager angeordnet sein, der als Restkühler oder als zusätzlicher Abgasrückführkühler arbeitet, um das Abgas auf die gewünschte Zieltemperatur abzukühlen. Dies kann dann erforderlich sein, wenn das Temperaturniveau des Abwärmenutzungskreises 23 oberhalb der Zieltemperatur des rückgeführten Abgases liegt.

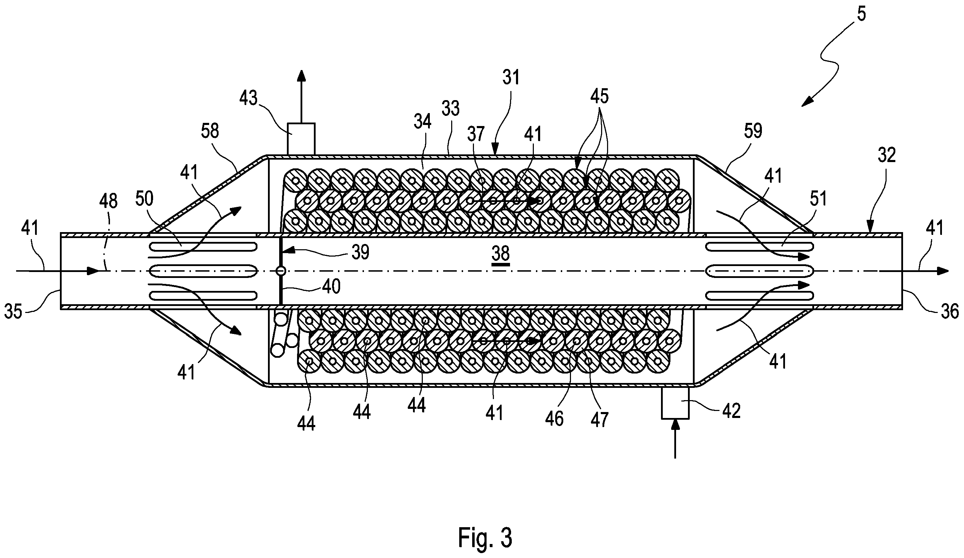

Entsprechend den Figuren 3, 4, 8 bis 10, 13 und 15 umfasst der Wärmeübertrager 5 ein Gehäuse 31, das ein Rohr 32 enthält und einen Mantel 33 aufweist. Der Mantel 33 umschließt das Rohr 32 mit einem radialen Abstand, so dass sich radial zwischen dem Rohr 32 und dem Mantel 33 ein Ringkanal 34 ausbildet. Am Gehäuse 31 sind ein Primäreinlass 35 und ein Primärauslass 36 ausgebildet. Des Weiteren enthält das Gehäuse 31 einen Primärpfad 37, der den Primäreinlass 35 und den Primärauslass 36 fluidisch miteinander verbindet und der ein Primärmedium, zum Beispiel das Abgas der Brennkraftmaschine 3 gemäß der in Figur 1 gezeigten Ausführungsform oder das rückgeführte Abgas gemäß der in Figur 2 gezeigten Ausführungsform, durch den Ringkanal 34 führt. Somit definiert der Ringkanal 34 den Primärpfad 37. Im Unterschied dazu definiert das Rohr 32 einen Bypasspfad 38, der ebenfalls den Primäreinlass 35 mit dem Primärauslass 36 fluidisch verbindet und der das Primärmedium durch das Rohr 32 führt.

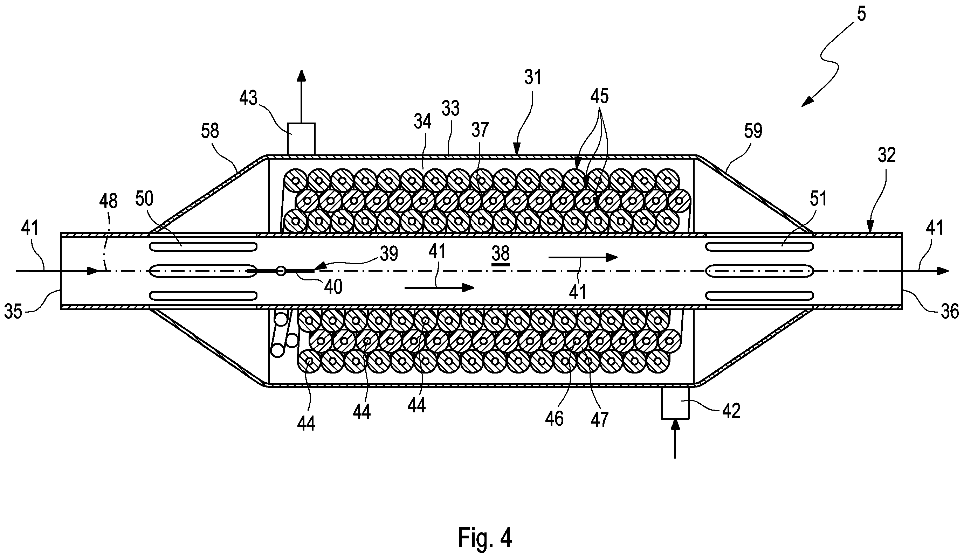

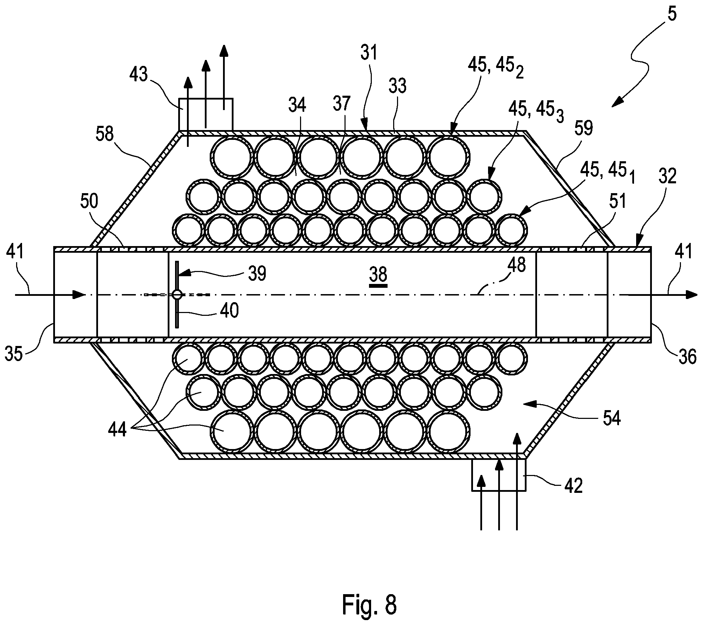

Der Wärmeübertrager 5 ist außerdem mit einer Steuereinrichtung 39 ausgestattet, mit deren Hilfe eine Durchströmung des Primärpfads 37 und des Bypasspfads 38 mit dem Primärmedium gesteuert werden kann. Beispielsweise umfasst die Steuereinrichtung 39 hierzu ein Steuerglied 40, vorzugsweise eine Klappe, das im Rohr 32 angeordnet ist und mit dessen Hilfe ein durchströmbarer Querschnitt des Rohrs 32 verändert werden kann. Beispielsweise zeigt Figur 3 eine Schließstellung des Stellglieds 40, in welcher der durchströmbare Querschnitt des Rohrs 32 weitgehend gesperrt ist, so dass das Abgas gemäß Pfeilen 41 dem Primärpfad 37 folgt und dementsprechend durch den Ringkanal 34 strömt. Im Unterschied dazu zeigt Figur 4 einen Zustand, bei dem das Stellglied 40 in eine Offenstellung verstellt ist, in der es den durchströmbaren Querschnitt des Rohrs 32 maximal freigibt. Da das Rohr 32 einen deutlich geringeren Durchströmungswiderstand besitzt als der Ringkanal 34, strömt das Abgas in diesem Fall entsprechend Pfeilen 41 nahezu ausschließlich durch das Rohr 32 und folgt dementsprechend dem Bypasspfad 38. In den Figuren 8 bis 10, 13 und 15 ist das Stellglied 40 jeweils mit durchgezogener Linie in seiner Schließstellung angedeutet, während eine unterbrochene Linie die Offenstellung des Stellglieds 40 andeutet. Es ist klar, dass die Steuereinrichtung 39 auch wenigstens eine Zwischenstellung, vorzugsweise beliebige Zwischenstellungen, einstellen kann, um eine gewünschte Strömungsaufteilung auf den Primärpfad 37 und den Bypasspfad 38 bedarfsabhängig einstellen zu können.

Der Wärmeübertrager 5 ist außerdem mit einem Sekundäreinlass 42 und einem Sekundärauslass 43 ausgestattet, die über mehrere Sekundärpfade 44 fluidisch miteinander verbunden sind, wobei die Sekundärpfade 44 ein Sekundärmedium führen. Das Sekundärmedium ist in den Beispielen der Figuren 1 und 2 durch das Arbeitsmedium des Abwärmenutzungskreises 4 gebildet. Die Sekundärpfade 44 sind ebenfalls durch den Ringkanal 34 hindurchgeführt, derart, dass sich eine mediengetrennte, wärmeübertragende Kopplung zwischen den Primärpfad 37 und den Sekundärpfaden 44 ergibt.

Gemäß den Figuren 3 bis 15 sind die Sekundärpfade 44 mit Hilfe von wenigstens zwei Wendeln 45 gebildet. Diese Wendeln 45 sind dabei im Ringkanal 34 angeordnet und umschlingen das Rohr 32 schraubenförmig. Jede Wendel 45 führt einen Sekundärpfad 44. Die Wendeln 45 sind hierbei jeweils mit Hilfe eines Wendelrohrs 46 gebildet, das sich schraubenförmig erstreckt, das innen das Sekundärmedium führt, also den jeweiligen Sekundärpfad 44 enthält und das außen Kühlrippen 47 trägt, die dem Primärmedium ausgesetzt sind.

Die Figuren 3 bis 9 zeigen nun Ausführungsformen, bei denen zumindest zwei Wendeln 45 im Ringkanal 34 radial übereinander angeordnet sind. Die Radialrichtung bezieht sich dabei auf eine Längsachse 48 des geradlinigen Mantels 33 bzw. des geradlinigen Rohrs 32. Rohr 32 und Mantel 33 sind zweckmäßig zylindrisch gestaltet. Dabei können Rohr 32 und Mantel 33 bei allen Ausführungsformen jeweils einen runden Querschnitt besitzen, der Kreisförmig oder oval oder elliptisch sein kann.

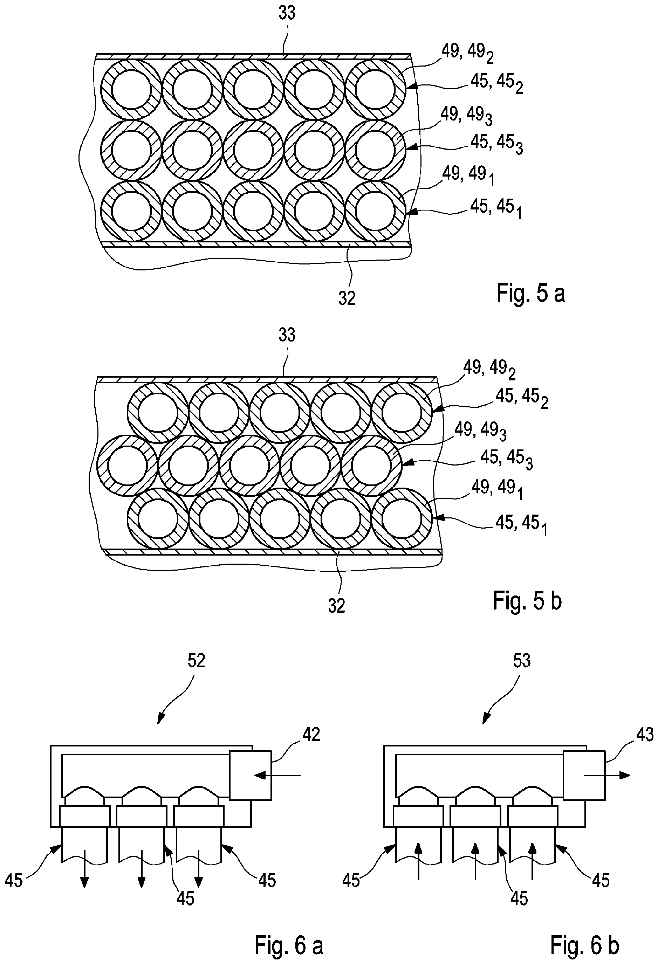

Die einzelnen Wendeln 45 besitzen eine Mehrzahl von Schlingen, die das Rohr 32 umschlingen und die in den Figuren 5a und 5b mit 49 bezeichnet sind. Durch das Anordnen der Wendeln 45 radial übereinander gibt es gemäß den Figuren 5a und 5b innenliegende Schlingen 49₁ einer innenliegenden Wendel 45₁, die zum Rohr 32 direkt benachbart sind. Ferner gibt es außenliegende Schlingen 49₂ einer außenliegenden Wendel 45₂, die zum Mantel 33 direkt benachbart sind. Sofern wie bei den hier gezeigten Ausführungsformen mehr als zwei Wendeln 45 vorgesehen sind, existiert auch wenigstens eine mittlere Wendel 45₃, die mittlere Schlingen 49₃ aufweist, die sowohl zum Rohr 32 als auch zum Mantel 33 nur indirekt benachbart sind, nämlich jeweils über eine innenliegende Schlinge 49₁ und eine außenliegende Schlinge 49₂.

Gemäß Figur 5a können die radial benachbarten Wendeln 45 hinsichtlich ihrer Schlingen 49 radial fluchtend angeordnet sein. Eine kompaktere Bauweise ergibt sich gemäß Figur 5b, wenn die radial benachbarten Wendeln 45 jeweils um einen halben Schlingenquerschnitt axial versetzt zueinander angeordnet sind.

Damit das Primärmedium abhängig von der Stellung des Steuerglieds 40 quasi beliebig auf den Primärpfad 37 und den Bypasspfad 38 aufgeteilt werden kann, ist bei den hier gezeigten Ausführungsformen das Rohr 32 durchgehend ausgestaltet, so dass es direkt an den Primäreinlass 35 und den Primärauslass 36 angeschlossen ist bzw. dieselben bildet. Das Rohr 32 weist ferner einen perforierten, hier geschlitzten Einlassbereich 50 und einen perforierten, hier geschlitzten Auslassbereich 51 auf, wodurch eine fluidische Verbindung zwischen dem Rohr 32 und dem Ringkanal 34 geschaffen wird. Der Einlassbereich 50 befindet sich dabei stromauf der Wendeln 45, während sich der Auslassbereich 51 stromab der Wendeln 45 befindet. Bei geöffnetem Steuerglied 40 ist durch die im Ringkanal 34 angeordneten Wendeln 45 der Durchströmungswiderstand des Ringkanals 34 so groß, dass das Primärmedium nahezu ausschließlich durch das Rohr 32 strömt, das einen deutlich geringeren Durchströmungswiderstand besitzt.

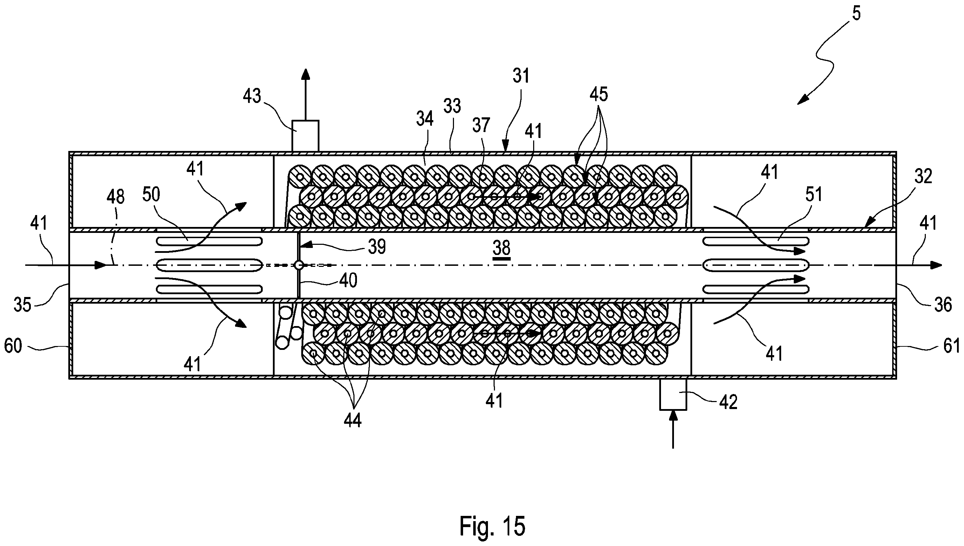

In den Beispielen der Fig. 3, 4, 8 bis 10 und 13 besitzt das Gehäuse 31 einen Einlasstrichter 58, der den einlassseitigen Übergang vom Rohr 32 zum Mantel 33 bildet und in dem sich der perforierte Einlassbereich 50 befindet, sowie einen Auslasstrichter 59, der den auslassseitigen Übergang vom Rohr 32 zum Mantel 33 bildet und in dem sich der perforierte Auslassbereich 51 befindet. Im Unterschied dazu zeigt Fig. 15 eine Ausführungsform, die anstelle des Einlasstrichters 58 einen einlassseitigen Endboden 60 oder Einlassendboden 60 und anstelle des Auslasstrichters 59 einen auslassseitigen Endboden 61 oder Auslassendboden 61 aufweist, die stirnseitige Enden des Gehäuses 31 definieren und die am Mantel 33 befestigt sind, beispielsweise mittels Bördelung. In diesem Fall sind Mantel 33 und Rohr 32 nicht direkt miteinander verbunden. Der Mantel 33 überdeckt in diesem Fall in der Axialrichtung 48 sowohl den gasdurchlässigen Einlassbereich 50 als auch den gasdurchlässigen Auslassbereich 51.

Damit die einzelnen Wendeln 45 parallel vom Sekundärfluid durchströmt werden können, kann gemäß Figur 6a ein Verteilerelement 52 vorgesehen sein, das einlassseitig an den Sekundäreinlass 42 und auslassseitig an die Wendeln 45 angeschlossen ist. Analog dazu kann gemäß Figur 6b ein Sammelelement 53 vorgesehen sein, das einlassseitig an die Wendeln 45 und auslassseitig an den Sekundärauslass 43 angeschlossen ist. Grundsätzlich können das Verteilerelement 52 und das Sammelelement 53 ähnlich, vorzugsweise identisch, aufgebaut sein.

Ein derartiges Verteilerelement 52 kann dabei im Inneren des Gehäuses 31 angeordnet sein und mit dem außenliegenden Sekundäreinlass 42 verbunden sein. Ebenso ist es möglich, ein derartiges Verteilerelement 52 außen am Gehäuse 31 anzuordnen, so dass es unmittelbar den Sekundäreinlass 42 bildet. Entsprechendes gilt auch für das Sammelelement 53, das entweder im Inneren des Gehäuses 31 angeordnet ist und mit dem außen am Gehäuse 31 angeordneten Sekundärauslass 43 verbunden ist oder das außen am Gehäuse 31 angeordnet ist und selbst den Sekundärauslass 43 bildet.

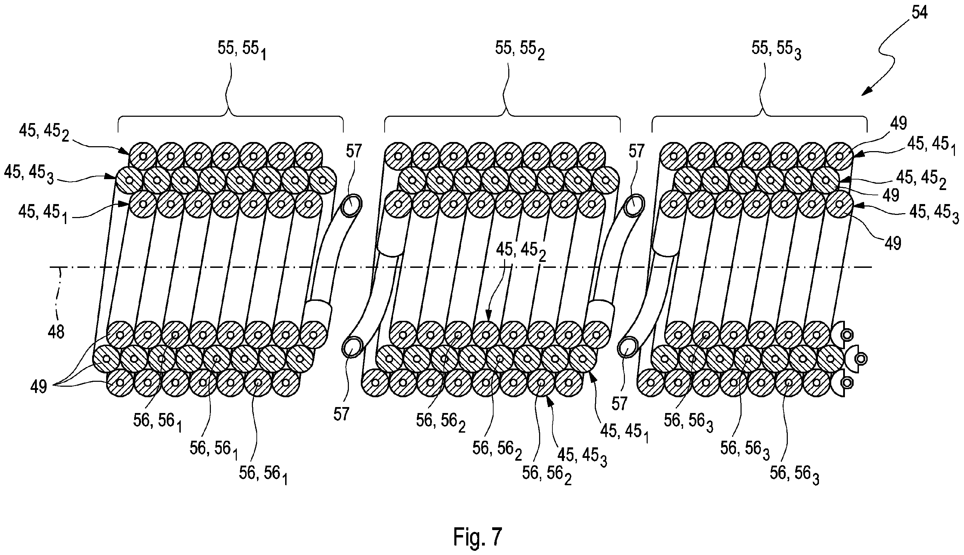

Figur 7 zeigt eine Wendelanordnung 54 ohne Rohr 32 und ohne Mantel 33, wie sie im Ringkanal 34 einer anderen Ausführungsform des Wärmeübertragers 5 realisiert sein kann. Die Wendelanordnung 54 umfasst hier drei Wendeln 45, nämlich eine erste Wendel 45₁, eine zweite Wendel 45₂ und eine dritte Wendel 45₃. Die Wendeln 45 bilden drei axial benachbarte Wendelpakete 55, nämlich ein erstes Wendelpaket 55₁, ein zweites Wendelpaket 55₂ und ein drittes Wendelpaket 55₃. Die Axialrichtung ist dabei wieder durch die Längsachse 48 des Gehäuses 31 definiert. Innerhalb jedes Wendelpakets 55 verläuft von jeder Wendel 45 ein Wendelabschnitt 56, der mehrere Schlingen 49 umfasst. Durch die insgesamt dreilagige Anordnung der Wendeln 45 bzw. der Wendelabschnitte 56 ergeben sich für die Schlingen 49 insgesamt drei verschiedene radiale Positionen, nämlich radial innenliegend, radial außenliegend sowie eine mittlere Position, die sich radial zwischen der innenliegenden und der außenliegenden Position befindet. Innerhalb des jeweiligen Wendelabschnitts 56 ist dabei die radiale Position der zugehörigen Schlingen 49 innerhalb desselben Wendelpakets 55 gleich. Dafür sind die radialen Positionen der Schlingen 49 derselben Wendeln 45 in den verschiedenen Wendelpaketen 55 verschieden.

Im Beispiel der Figur 7 ist im ersten Wendelpaket 55₁ (in Figur 7 links dargestellt) ein erster Wendelabschnitt 56₁ der ersten Wendel 45₁ radial innenliegend angeordnet, so dass alle Schlingen 49 dieses ersten Wendelabschnitts 56₁ die innere Position einnehmen. Im ersten Wendelabschnitt 56₁ der zweiten Wendel 45₂ liegen die Schlingen 49 außen und nehmen so die äußere Position ein. Bei der dritten Wendel 45₃ befindet sich die Schlingen 49 im ersten Wendelabschnitt 56₁ auf der mittleren Position. Somit besitzen die drei Wendeln 45 im ersten Wendelpaket 55₁ jeweils einen ersten Wendelabschnitt 56₁, innerhalb dem die zugehörigen Schlingen 49 jeweils axial nebeneinander liegen und innerhalb derselben radialen Position angeordnet sind.

Im zweiten Wendelpaket 55₂ (in Figur 7 mittig dargestellt) sind nun die radialen Positionierungen der zweiten Wendelabschnitte 56₂ verändert. So befindet sich der zweite Wendelabschnitt 56₂ der ersten Wendel 45₁ nunmehr auf der mittleren Position. Der zweite Wendelabschnitt 56₂ der zweiten Wendel 45₂ befindet sich nun auf der inneren Position und der zweite Wendelabschnitt 56₂ der dritten Wendel 45₃ befindet sich nun auf der äußeren Position.

Im dritten Wendelpaket 55₃ (in Figur 7 rechts dargestellt) sind die radialen Positionen der zugehörigen dritten Wendelabschnitte 56₃ nochmals vertauscht. So befindet sich der dritte Wendelabschnitt 56₃ der ersten Wendel 45₁ nunmehr auf der außenliegenden Position. Der dritte Wendelabschnitt 56₃ der zweiten Wendel 45₂ befindet sich nun auf der mittleren Position und der dritte Wendelabschnitt 56₃ der dritten Wendel 45₃ befindet sich nun auf der innenliegenden Position.

Gemäß Figur 7 kann zwischen benachbarten Wendelpaketen 55 je Wendel 45 ein Verbindungsrohr 57 vorgesehen sein, das einen radial weiter außenliegenden Wendelabschnitt 56 des einen Wendelpakets 55 mit einem radial weiter innenliegenden Wendelabschnitt 56 des jeweils anderen Wendelpakets 55 fluidisch verbindet.

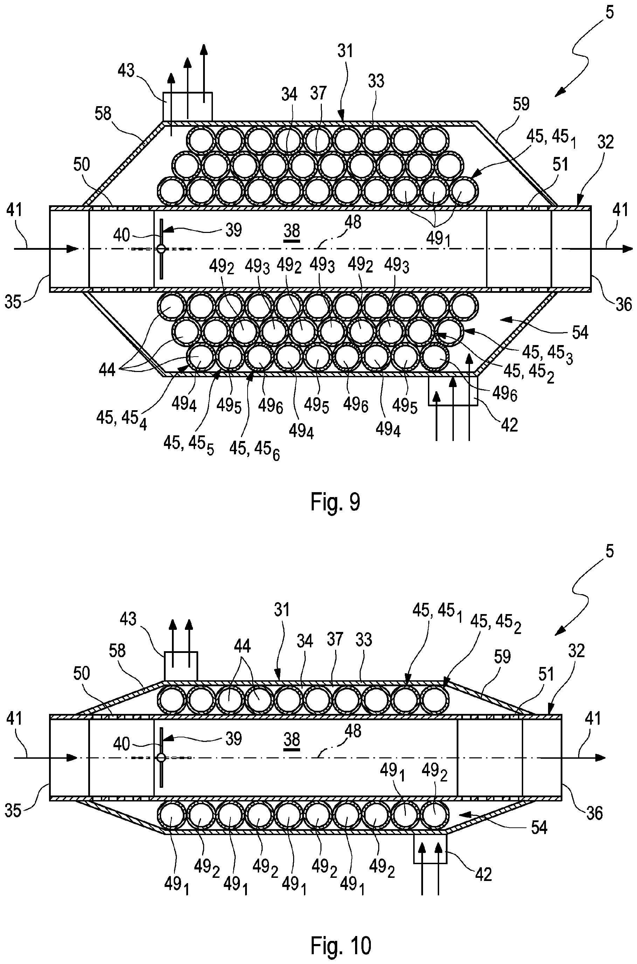

Mit Bezug auf die Figuren 8 und 9 werden nun Ausführungsformen exemplarisch erläutert, bei denen sich die Wendeln 45 durch unterschiedliche Wärmeübertragungsleistungen voneinander unterscheiden. Dabei sind diese Ausführungsformen quasi beliebig mit den vorstehenden und nachfolgenden Ausführungsformen kombinierbar.

Figur 8 zeigt beispielsweise eine Ausführungsform, bei welcher sich die einzelnen Wendeln 45 durch unterschiedliche durchströmbare Querschnitte voneinander unterscheiden. So zeigen beispielsweise die in Figur 8 dargestellten Wendeln 45 mit zunehmendem radialem Abstand vom Rohr 32 einen zunehmenden durchströmbaren Querschnitt. Innerhalb der jeweiligen Wendel 45 bzw. innerhalb des jeweiligen Wendelabschnitts 56 sind die durchströmbaren Querschnitte dabei konstant. Gemäß Figur 8 besitzt die innenliegende Wendel 45₁ den kleinsten durchströmbaren Querschnitt, während die außenliegende Wendel 45₂ den größten durchströmbaren Querschnitt aufweist. Die mittlere Wendel 45₃ besitzt einen mittleren durchströmbaren Querschnitt. Ferner ist bei den Ausführungsformen der Figuren 8 und 9 vorgesehen, dass sich die Wendeln 45 durch unterschiedliche Anzahl an Schlingen 49 voneinander unterscheiden. Erkennbar besitzen die weiter außen angeordneten Wendeln 45 bzw. Wendelabschnitte 56 eine kleinere Anzahl an Schlingen 49 als die weiter innen angeordneten Wendeln 45 bzw.

Wendelabschnitte 56. Beispielsweise besitzt somit die innenliegende Wendel 45₁ die größte Schlingenanzahl, während die außenliegende Wendel 45₂ die kleinste Schlingenanzahl aufweist. Die mittig angeordnete Wendel 45₃ besitzt eine mittlere Schlingenanzahl.

Andere Maßnahmen, welche die Wärmeübertragungsleistung der Wendeln 45 beeinflussen, sind beispielsweise die Verwendung unterschiedlicher Materialien für die Wendeln 45 bzw. für die Wendelrohre 46 und die Kühlrippen 47. Ferner können sich auch die Kühlrippen 47 hinsichtlich ihrer Größe und/oder hinsichtlich ihrer Anordnungsdichte und/oder hinsichtlich ihrer Geometrie voneinander unterscheiden. Die Verwendung unterschiedlicher Werkstoffe führt zu unterschiedlichen Wärmeleitkoeffizienten. Die genannten Maßnahmen lassen sich beliebig miteinander kombinieren. Ziel der unterschiedlichen Wärmeübertragungsleistung innerhalb der unterschiedlichen Wendeln 45 ist eine möglichst homogene Wärmeübertragung vom Primärmedium auf das Sekundärmedium.

Bei der in Figur 8 gezeigten Ausführungsform sowie bei den Varianten der Figuren 3 bis 5 und 7 sind sämtliche Wendeln 45 ausschließlich radial übereinander angeordnet. In der Folge gehören Schlingen 49, die in derselben radialen Position axial zueinander benachbart sind, zur selben Wendel 45 bzw. zum selben Wendelabschnitt 56, sofern die Wendeln 45 in Wendelpakete 55 unterteilt sind. Die in radialer Richtung dreilagige oder dreischichtige Wendelanordnung 54 umfasst dann auch nur drei Wendeln 45.

Im Unterschied dazu zeigt Figur 9 nun eine Ausführungsform, bei der die in radialer Richtung dreilagige bzw. dreischichtige Wendelanordnung 54 mehr als drei Wendeln 45, nämlich sechs Wendeln 45 umfasst. Radial innen, also an der inneren Position befindet sich eine erste Wendel 45₁. Sämtliche Schlingen 49 dieser ersten Wendel 45₁ sind dann erste Schlingen 49₁, die axial benachbart sind. Auf der mittleren Position befinden sich eine zweite Wendel 45₂ und eine dritte Wendel 45₃, die zweite und dritte Schlingen 49₂ und 49₃ aufweisen, die einander in der Axialrichtung abwechseln. Dabei sind die beiden Wendeln 45₂ und 45₃ nach Art einer Doppelhelix axial ineinander verschlungen angeordnet. Dementsprechend sind zweite Schlingen 49₂ und dritte Schlingen 49₃ axial nebeneinander abwechselnd angeordnet. In der außenliegenden Position sind im Beispiel der Figur 9 sogar drei Wendeln 45 angeordnet, nämlich eine vierte Wendel 45₄, eine fünfte Wendel 45₅ und eine sechste Wendel 45₆. Diese drei Wendeln 45₄, 45₅, 45₆ sind dabei nach Art einer Dreifachhelix oder Mehrfachhelix axial ineinander angeordnet, derart, dass vierte Schlingen 49₄, fünfte Schlingen 49₅ und sechste Schlingen 49₆ axial nebeneinander angeordnet sind und sich regelmäßig abwechseln.

Figur 10 zeigt nun eine Ausführungsform, bei der eine radial einschichtige bzw. einlagige Wendelanordnung 54 vorgesehen ist, wobei die beiden gezeigten Wendeln 45 im Ringkanal 34 axial ineinander angeordnet sind, so dass sich auch hier die Schlingen 49 verschiedener Wendeln 45 axial nebeneinander befinden. Da hier nur zwei Wendeln 45 vorgesehen sind, besitzt die Wendelanordnung 54 die Form einer Doppelhelix. Da hier sämtliche Wendeln 45 im Ringkanal 34 axial ineinander verschlungen sind, liegen alle Schlingen 49 aller Wendeln 45 auf derselben radialen Position, wobei sie sowohl zum Rohr 32 als auch zum Mantel 33 jeweils unmittelbar benachbart sind.

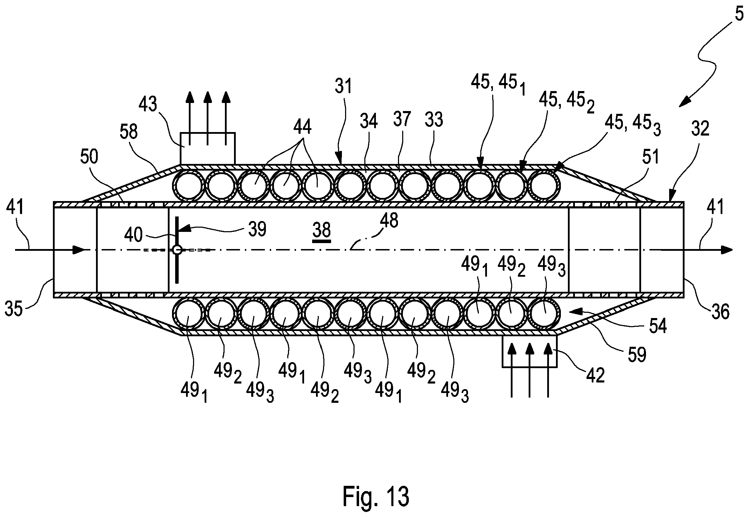

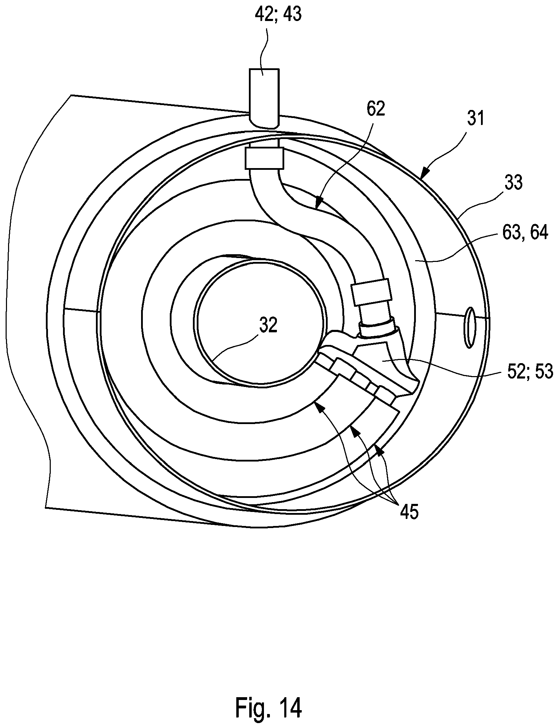

Unter der Formulierung "unmittelbar benachbart" wird im vorliegenden Zusammenhang verstanden, dass zwischen den jeweiligen Schlingen 49 bzw. der jeweiligen Wendel 45 bzw. dem jeweiligen Wendelabschnitt 56 keine weiteren Schlingen, Wendelabschnitte oder Wendeln angeordnet sind, während eine Kontaktierung mit dem Rohr 32 bzw. mit dem Mantel 33 nicht erforderlich ist. Vielmehr kann sogar vorgesehen sein, dass die innenliegenden Schlingen 49 über einen thermischen Isolator am Rohr 32 anliegen. Zusätzlich oder alternativ können die außenliegenden Schlingen 49 über einen thermischen Isolator am Mantel 33 anliegen. Entsprechendes gilt dann für die eine Lage der einlagigen bzw. einschichtigen Konfiguration der Figuren 10 und 13. Zusätzlich oder alternativ zu einer außenliegenden Isolation kann eine Lagerung vorgesehen sein, die sich einerseits am Mantel 33 und andererseits an der jeweiligen Wendel 45 oder an der Wendelanordnung 54 abstützt, um die Wendel 45 bzw. die Wendelanordnung 54 im Mantel 33 axial zu fixieren. Besonders vorteilhaft kann es sich bei der Lagerung um eine thermisch isolierende Lagerung, z.B. in Form einer Lagermatte, handeln. In Fig. 14 ist eine außenliegende Isolierung 63 bzw. eine Lagerung 64 erkennbar.

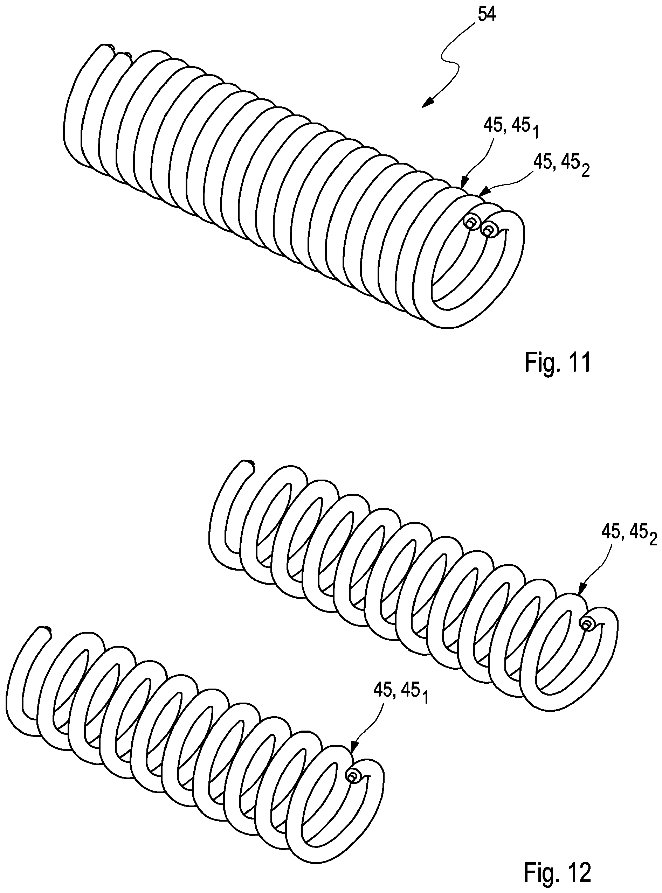

Gemäß den Figuren 11 und 12 können die beiden Wendeln 45 gemäß einer Doppelhelix axial ineinander verschlungen angeordnet sein. Die einzelnen Wendeln 45 können dabei identisch aufgebaut sein.

Figur 13 zeigt eine Variante des Wärmeübertragers aus Figur 10, bei dem rein exemplarisch die Wendelanordnung 54 nicht nur zwei Wendeln 45, sondern drei Wendeln 45 umfasst, die nach Art einer Dreifachhelix axial ineinander verschlungen angeordnet sind, so dass sich auch hier die Schlingen 49 unterschiedlicher Wendeln 45 axial nebeneinander befinden.

Entsprechend Fig. 14 erfolgt eine fluidische Verbindung der jeweiligen Wendel 45 mit dem gehäuseseitigen Sekundanschluss, also mit dem Sekundäreinlass 42 oder mit dem Sekundärauslass 43, gemäß einer bevorzugten Ausführungsform nicht direkt, sondern über ein Entkoppelelement 62, also indirekt. Das jeweilige Entkoppelelement 62 ist dabei im Inneren des Gehäuses 31 angeordnet. Es ist beweglich bzw. flexibel und kann Relativbewegungen zwischen der jeweiligen Wendel 45 und dem Gehäuse 31 bw. dem Mantel 33 ausgleichen. Zu derartigen Relativbewegungen kann es beispielsweise aufgrund von unterschiedlichen thermischen Ausdehnungskoeffizienten des Mantels 33 und der jeweiligen Wendel 45 kommen. Das Entkoppelelement 62 kann beispielsweise als metallischer Wellschlauch oder Agraffschlauch konfiguriert sein. Es kann radial ein- oder mehrschichtig aufgebaut sein. Es kann innen und/oder außen eine elastische Schutzschicht aufweisen, welche die Wellenstruktur des Wellschlauches abdeckt. Eine derartige Schutzschicht kann beispielsweise als Agraff ausgestaltet sein. Im Beispiel der Fig. 14 ist das Entkoppelelement 62 einenends mit dem jeweiligen Sekundäranschluss 42, 43 fluidisch verbunden und anderenends mit einem Verteilerelement 52 oder mit einem Sammlerelement 53, das seinerseits in Fig. 14 rein Exemplarisch mit drei Wendeln 45 fluidisch verbunden ist.

## Patentansprüche

1. Wärmeübertrager
- mit einem Gehäuse (31), das ein Rohr (32) enthält und einen Mantel (33) aufweist, der das Rohr (32) unter Ausbildung eines Ringkanals (34) umschließt,
- mit einem Primäreinlass (35) und einem Primärauslass (36), die über einen ein Primärmedium durch den Ringkanal (34) führenden Primärpfad (37) und über einen das Primärmedium durch das Rohr (32) führenden Bypasspfad (38) fluidisch miteinander verbunden sind,
- mit einer Steuereinrichtung (39) zum Steuern einer Durchströmung des Primärpfads (37) und des Bypasspfads (38) mit dem Primärmedium,
- mit einem Sekundäreinlass (42) und einem Sekundärauslass (43), die über wenigstens zwei Sekundärpfade (44) zum Führen eines Sekundärmediums fluidisch miteinander verbunden sind,
- wobei der Primärpfad (37) mit den Sekundärpfaden (44) mediengetrennt wärmeübertragend gekoppelt ist,
- wobei wenigstens zwei Wendeln (45) im Ringkanal (34) angeordnet sind, die das Rohr (32) schraubenförmig umschlingen und durch die je ein Sekundärpfad (44) hindurchführt,
- wobei wenigstens zwei Wendeln (45) im Ringkanal (34) radial übereinander angeordnet sind,
**dadurch gekennzeichnet,**
- **dass** die wenigstens zwei Wendeln (45) jeweils wenigstens zwei axial benachbarte Wendelpakete (55) bilden, in denen von jeder Wendel (45) ein mehrere Schlingen (49) umfassender Wendelabschnitt (56) verläuft,
- **dass** eine radiale Position der Schlinge (49) des jeweiligen Wendelabschnitts (56) innerhalb desselben Wendelpakets (55) gleich ist,
- **dass** die radialen Positionen der Schlingen (49) derselben Wendeln (45) in den benachbarten Wendelpaketen (55) verschieden sind,
- **dass** für den Fall, dass n der Anzahl der Wendeln (45) entspricht, wenigstens n Wendelpakete (55) vorgesehen sind, in denen jeweils n verschiedene radiale Positionen für die Schlinge (49) möglich sind,
- **dass** bei jeder Wendel (45) die Schlingen (49) der Wendelabschnitte (56) jede mögliche radiale Position zumindest einmal einnehmen.

2. Wärmeübertrager nach Anspruch 1,
**dadurch gekennzeichnet,**
**dass** wenigstens drei Wendeln (45) vorgesehen sind.

3. Wärmeübertrager nach Anspruch 1 oder 2,
**dadurch gekennzeichnet,**
**dass** jede Wendel (45) ein Wendelrohr (46) aufweist, das innen das Sekundärmedium führt und außen dem Primärmedium ausgesetzte Kühlrippen (47) trägt.

4. Wärmeübertrager nach einem der Ansprüche 1 bis 3,
**dadurch gekennzeichnet,**
**dass** zwischen benachbarten Wendelpaketen (55) je Wendel (45) ein Verbindungsrohr (57) vorgesehen ist, das einen radial weiter innenliegenden Wendelabschnitt (56) des einen Wendelpakets (55) mit einem radial weiter außenliegenden Wendelabschnitt (56) des anderen Wendelpakets (55) fluidisch verbindet.

5. Wärmeübertrager nach einem der Ansprüche 1 bis 4,
**dadurch gekennzeichnet,**
**dass** sich die Wendeln (45) durch unterschiedliche Wärmeübertragungsleistungen voneinander unterscheiden.

6. Wärmeübertrager nach einem der Ansprüche 1 bis 5,
**dadurch gekennzeichnet,**
**dass** sich die Wendeln (45) durch unterschiedliche durchströmbare Querschnitte voneinander unterscheiden.

7. Wärmeübertrager nach einem der Ansprüche 1 bis 6,
**dadurch gekennzeichnet,**
**dass** sich die Wendeln (45) durch unterschiedliche Anzahl an Schlingen (49) voneinander unterscheiden.

8. Wärmeübertrager nach Anspruch 3 sowie nach einem der Ansprüche 4 bis 7,
**dadurch gekennzeichnet,**
**dass** sich die Wendeln (45) durch unterschiedliche Größe der Kühlrippen (47) und/oder durch unterschiedliche Anzahl der Kühlrippen (47) je Längeneinheit und/oder durch unterschiedliche Geometrie der Kühlrippen (47) und/oder durch unterschiedliche Werkstoffe der Kühlrippen (47) voneinander unterscheiden.

9. Wärmeübertrager nach einem der Ansprüche 1 bis 8,
**dadurch gekennzeichnet,**
**dass** sich die Wendeln (45) durch unterschiedliche Werkstoffe voneinander unterscheiden.

10. Wärmeübertrager nach einem der Ansprüche 1 bis 9,
**dadurch gekennzeichnet,**
**dass** alle Wendeln (45) radial übereinander angeordnet sind.

11. Wärmeübertrager nach einem der Ansprüche 1 bis 9,
**dadurch gekennzeichnet,**
**dass** zumindest in einer radial weiter außenliegenden Position wenigstens zwei Wendeln (45) axial ineinander angeordnet sind, so dass Schlingen (49) verschiedener Wendeln (45) axial nebeneinander angeordnet sind.

12. Wärmeübertrage nach einem der Ansprüche 1 bis 11,
**dadurch gekennzeichnet,**
**dass** zumindest eine Wendel (45) über ein Entkoppelelement (62) mit dem Sekundäreinlass (42) oder mit dem Sekundärauslass (43) fluidisch verbunden ist.

13. Vorrichtung
- mit einer Brennkraftmaschine (3), die eine Frischluftanlage (8) zum Zuführen von Frischluft zu Brennräumen (7) der Brennkraftmaschine (3) und eine Abgasanlage (10) zum Abführen von Abgas von den Brennräumen (7) sowie optional eine Abgasrückführanlage (12) zum Rückführen von Abgas von der Abgasanlage (10) zur Frischluftanlage (8) aufweist,
- mit einer Abwärmenutzungsanlage (4), die in einem Abwärmenutzungskreis (23), in dem ein Arbeitsmedium zirkuliert, einen Verdampfer (24) zum Verdampfen des Arbeitsmediums, stromab davon eine Expansionsmaschine (25) zum Entspannen des Arbeitsmediums, stromab davon einen Kondensator (26) zum Kondensieren des Arbeitsmediums und stromab davon eine Fördereinrichtung (27) zum Antreiben des Arbeitsmediums im Abwärmenutzungskreis (23) aufweist,
- mit einem Wärmeübertrager (5) nach einem der Ansprüche 1 bis 12,
- wobei der Primärpfad (37) in die Abgasanlage (10) oder in die Abgasrückführanlage (12) eingebunden ist, so dass das Abgas oder das rückgeführte Abgas das Primärmedium bildet,
- wobei die Sekundärpfade (44) in den Abwärmenutzungskreis (23) eingebunden sind, so dass das Arbeitsmedium das Sekundärmedium bildet.

14. Vorrichtung
- mit einer Brennkraftmaschine (3), die eine Frischluftanlage (8) zum Zuführen von Frischluft zu Brennräumen (7) der Brennkraftmaschine (3) und eine Abgasanlage (10) zum Abführen von Abgas von den Brennräumen (7) sowie optional eine Abgasrückführanlage (12) zum Rückführen von Abgas von der Abgasanlage (10) zur Frischluftanlage (8) aufweist,
- mit einem Kühlkreis, in dem ein Kühlmedium zirkuliert,
- mit mindestens einem Wärmeübertrager (5) nach einem der Ansprüche 1 bis 12,
- wobei der Primärpfad (37) in die Abgasanlage (10) oder in die Abgasrückführanlage (12) eingebunden ist, so dass das Abgas oder das rückgeführte Abgas das Primärmedium bildet,
- wobei die Sekundärpfade (44) in den Kühlkreis eingebunden sind, so dass das Kühlmedium das Sekundärmedium bildet.

## Claims

1. A heat transfer unit
- with a housing (31), which contains a tube (32) and comprises a jacket (33), which encloses the tube (32) subject to forming an annular channel (34),
- with a primary inlet (35) and a primary outlet (36), which are fluidically interconnected via a primary path (37) conducting a primary medium through the annular channel (34) and via a bypass path (38) conducting the primary medium through the tube (32),
- with a control device (39) for controlling a through-flow of the primary path (37) and of the bypass path (38) with the primary medium,
- with a secondary inlet (42) and a secondary outlet (43), which are fluidically interconnected via at least two secondary paths (44) for conducting a secondary medium,
- wherein the primary path (37) is coupled to the secondary paths (44) in a media-separated, heat-transferring manner,
- wherein by at least two coils (45) are provided, which are arranged in the annular channel (34), which helically embrace the tube (32), and through which a secondary path (44) each leads,
- wherein the at least two coils (45) are arranged in the annular channel (34) radially above one another,
**characterized in**
- **that** the at least two coils (45) each form at least two axially adjacent coil packages (55), in which from each coil (45) a coil portion (56) comprising a plurality of loops (49) extends,
- **that** a radial position of the loop (49) of the respective coil portion (56) within the same coil package (55) is the same,
- **that** the radial positions of the loops (49) of the same coils (45) in the adjacent coil packages (55) are different,
- **that** in the case that n corresponds to the number of coils (45), at least n coil packages (55) are provided, in which in each case n different radial positions for the loop (49) are possible,
- **that** with each coil (45) the loops (49) of the coil portions (56) assume each possible radial position at least once.

2. The heat transfer unit according to claim 1, **characterized in that** at least three coils (45) are provided.

3. The heat transfer unit according to Claim 1 or 2, **characterized in that** each coil (45) comprises a coil tube (46), which inside conducts the secondary medium and outside carries the cooling fins (47) exposed to the primary medium.

4. The heat transfer unit according to any one of Claims 1 to 3, **characterized in that** between adjacent coil packages (55) for each coil (45) a connecting tube (57) is provided, which fluidically connects a coil portion (56) radially located further inside of the one coil package (55) with a coil portion (56) located radially further outside of the other coil package (55).

5. The heat transfer unit according to any one of the Claims 1 to 4, **characterized in that** the coils (45) differ from one another through different heat transfer performances.

6. The heat transfer unit according to any one of the Claims 1 to 5, **characterized in that** the coils (45) differ from one another through different through-flow-capable cross sections.

7. The heat transfer unit according to any one of the Claims 1 to 6, **characterized in that** the coils (45) differ from one another through a different number of loops (49).

8. The heat transfer unit according to Claim 3, and according to any one of the Claims 4 to 7, **characterized in that** the coils (45) differ from one another through a different size of the cooling fins (47) and/or through a different number of the cooling fins (47) per unit length and/or through a different geometry of the cooling fins (47) and/or through different materials of the cooling fins (47).

9. The heat transfer unit according to any one of the Claims 1 to 8, **characterized in that** the coils (45) differ from one another through different materials.

10. The heat transfer unit according to any one of the Claims 1 to 9, **characterized in that** all coils (45) are arranged radially above one another.

11. The heat transfer unit according to any one of the Claims 1 to 9, **characterized in that** at least in a position located radially further outside, at least two coils (45) are arranged axially within one another, so that loops (49) of different coils (45) are arranged axially next to one another.

12. The heat transfer unit according to any one of the Claims 1 to 11, **characterized in that** at least one coil (45) is fluidically connected to the secondary inlet (42) or to the secondary outlet (43) via a decoupling element (62).

13. A device
- with an internal combustion engine (3), which comprises a fresh air system (8) for supplying fresh air to combustion chambers (7) of the internal combustion engine (3) and an exhaust system (10) for discharging exhaust gas from the combustion chambers (7) and optionally an exhaust gas recirculation system (12) for recirculating exhaust gas from the exhaust system (10) to the fresh air system (8),
- with a waste heat utilisation system (4), which comprises a waste heat utilisation circuit (23), in which a working medium circulates, an evaporator (24) for evaporating the working medium, downstream thereof an expansion machine (25) for expanding the working medium, downstream thereof a condenser (26) for condensing the working medium and downstream thereof a conveying device (27) for driving the working medium in the waste heat utilisation circuit (23),
- with a heat transfer unit (5) according to any one of the Claims 1 to 12,
- wherein the primary path (37) is incorporated in the exhaust system (10) or in the exhaust gas recirculation system (12), so that the exhaust gas or the recirculated exhaust gas forms the primary medium,
- wherein the secondary paths (44) are incorporated in the waste heat utilisation circuit (23) so that the working medium forms the secondary medium.

14. A device
- with an internal combustion engine (3), which comprises a fresh air system (8) for feeding fresh air to combustion chambers (7) of the internal combustion engine (7) and an exhaust system (10) for discharging exhaust gas from the combustion chambers (7) and optionally an exhaust gas recirculation system (12) for recirculating exhaust gas from the exhaust system (10) to the fresh air system (8),
- with a cooling circuit in which a cooling medium circulates,
- with at least one heat transfer unit (5) according to any one of the Claims 1 to 12,
- wherein the primary path (37) is incorporated in the exhaust system (10) or in the exhaust gas recirculation system (12), so that the exhaust gas or the recirculated exhaust gas forms the primary medium,
- wherein the secondary paths (44) are incorporated in the cooling circuit, so that the cooling medium forms the secondary medium.

## Revendications

1. Echangeur de chaleur
- avec un boîtier (31), qui contient un tube (32) et qui présente une enveloppe (33), qui renferme le tube (32) en réalisant un canal annulaire (34),
- avec une entrée primaire (35) et une sortie primaire (36), qui sont reliées l'une à l'autre de manière fluidique par l'intermédiaire d'un chemin primaire (37) acheminant le milieu primaire à travers le canal annulaire (34) et par l'intermédiaire d'un chemin de dérivation (38) acheminant le milieu primaire à travers le tube (32),
- avec un système de commande (39) servant à commander une traversée du chemin primaire (37) et du chemin de dérivation (38) par le milieu primaire,
- avec une entrée secondaire (42) et une sortie secondaire (43), qui sont reliées l'une à l'autre de manière fluidique par l'intermédiaire au moins de deux chemins secondaires (44) servant à acheminer un milieu secondaire,
- dans lequel le chemin primaire (37) est couplé par transmission de chaleur et avec séparation des milieux aux chemins secondaires (44),
- dans lequel au moins deux hélices (45) sont disposées dans le canal annulaire (34), lesquelles entourent de manière à présenter une forme hélicoïdale le tube (32) et à travers lesquelles respectivement un chemin secondaire (44) mène de part en part,
- dans lequel au moins deux hélices (45) sont disposées radialement les unes au-dessus des autres dans le canal annulaire (34),
**caractérisé en ce**
- **que** les au moins deux hélices (45) forment respectivement au moins deux paquets d'hélices (55) axialement adjacents, dans lesquels un tronçon d'hélice (56) comprenant plusieurs boucles (49) s'étend depuis chaque hélice (45),
- **qu'**une position radiale de la boucle (49) du tronçon d'hélice (56) respectif est identique à l'intérieur du même paquet d'hélices (55),
- **que** les positions radiales des boucles (49) des mêmes hélices (45) sont différentes dans les paquets d'hélices (55) adjacents,
- **que** si n correspond au nombre des hélices (45), au moins n paquets d'hélices (55) sont prévus, dans lesquels respectivement n positions radiales différentes sont possibles pour la boucle (49),
- **que** pour chaque hélice (45), les boucles (49) des tronçons d'hélice (56) adoptent au moins une fois chaque position radiale possible.

2. Echangeur de chaleur selon la revendication 1,
**caractérisé en ce**
**qu'**au moins trois hélices (45) sont prévues.

3. Echangeur de chaleur selon la revendication 1 ou 2,
**caractérisé en ce**
**que** chaque hélice (45) présente un tube hélicoïdal (46), qui achemine à l'intérieur le milieu secondaire et qui supporte à l'extérieur des nervures de refroidissement (47) exposées au milieu primaire.

4. Echangeur de chaleur selon l'une quelconque des revendications 1 à 3,
**caractérisé en ce**
**que** par hélice (45) un tube de liaison (57) est prévu entre des paquets d'hélices (55) adjacents, lequel relie de manière fluidique un tronçon d'hélice (56), situé davantage à l'intérieur radialement, d'un paquet d'hélices (55) à un tronçon d'hélice (56), situé davantage à l'extérieur radialement, de l'autre paquet d'hélices (55).

5. Echangeur de chaleur selon l'une quelconque des revendications 1 à 4,
**caractérisé en ce**
**que** les hélices (45) se distinguent les unes des autres par différentes puissances de transmission de chaleur.

6. Echangeur de chaleur selon l'une quelconque des revendications 1 à 5,
**caractérisé en ce**
**que** les hélices (45) se distinguent les unes des autres par des sections transversales différentes pouvant être traversées.

7. Echangeur de chaleur selon l'une quelconque des revendications 1 à 6,
**caractérisé en ce**
**que** les hélices (45) se distinguent les unes des autres par un nombre de boucles (49) différent.

8. Echangeur de chaleur selon la revendication 3 ainsi que selon l'une quelconque des revendications 4 à 7,
**caractérisé en ce**
**que** les hélices (45) se distinguent les unes des autres par une taille des nervures de refroidissement (47) différente et/ou par un nombre des nervures de refroidissement (47) différent par unité de longueur et/ou par une géométrie des nervures de refroidissement (47) différente et/ou par des matériaux des nervures de refroidissement (47) différents.

9. Echangeur de chaleur selon l'une quelconque des revendications 1 à 8,
**caractérisé en ce**
**que** les hélices (45) se distinguent les unes des autres par des matériaux différents.

10. Echangeur de chaleur selon l'une quelconque des revendications 1 à 9,
**caractérisé en ce**
**que** toutes les hélices (45) sont disposées les unes au-dessus des autres radialement.

11. Echangeur de chaleur selon l'une quelconque des revendications 1 à 9,
**caractérisé en ce**
**qu'**au moins deux hélices (45) sont disposées l'une dans l'autre axialement au moins dans une position située davantage à l'extérieur radialement, de sorte que des boucles (49) de différentes hélices (45) soient disposées les unes à côté des autres axialement.

12. Echangeur de chaleur selon l'une quelconque des revendications 1 à 11,
**caractérisé en ce**
**qu'**au moins une hélice (45) est reliée de manière fluidique par l'intermédiaire d'un élément de découplage (62) à l'entrée secondaire (42) ou à la sortie secondaire (43).

13. Dispositif
- avec un moteur à combustion interne (3), qui présente un système d'air frais (8) servant à amener de l'air frais à des chambres de combustion (7) du moteur à combustion interne (3) et un système d'échappement (10) servant à évacuer des gaz d'échappement des chambres de combustion (7) ainsi qu'en option un système de reflux de gaz d'échappement (12) servant à refouler des gaz d'échappement depuis le système d'échappement (10) vers le système d'air frais (8),
- avec un système d'exploitation de chaleur perdue (4), qui présente, dans un circuit d'exploitation de chaleur perdue (23) dans lequel circule un milieu de travail, un évaporateur (24) servant à évaporer le milieu de travail, en aval de ce denier un moteur à expansion (25) servant à détendre le milieu de travail, en aval de ce dernier un condensateur (26) servant à condenser le milieu de travail, et en aval de ce dernier un système de transport (27) servant à entraîner le milieu de travail dans le circuit d'exploitation de chaleur perdue (23),
- avec un échangeur de chaleur (5) selon l'une quelconque des revendications 1 à 12,
- dans lequel le chemin primaire (37) est intégré dans le système d'échappement (10) ou dans le système de reflux de gaz d'échappement (12) de telle sorte que les gaz d'échappement ou les gaz d'échappement refoulés forment le milieu primaire,
- dans lequel les chemins secondaires (44) sont intégrés dans le circuit d'exploitation de chaleur perdue (23) de telle sorte que le milieu de travail forme le milieu secondaire.

14. Dispositif
- avec un moteur à combustion interne (3), qui présente un système d'air frais (8) servant à amener de l'air frais à des chambres de combustion (7) du moteur à combustion interne (3) et un système d'échappement (10) servant à évacuer des gaz d'échappement des chambres de combustion (7) ainsi qu'en option un système de reflux de gaz d'échappement (12) servant à refouler des gaz d'échappement depuis le système d'échappement (10) vers le système d'air frais (8),
- avec un circuit de refroidissement, dans lequel circule un milieu de refroidissement,
- avec au moins un échangeur de chaleur (5) selon l'une quelconque des revendications 1 à 12,
- dans lequel le chemin primaire (37) est intégré dans le système d'échappement (10) ou dans le système de reflux de gaz d'échappement (12) de sorte que les gaz d'échappement ou les gaz d'échappement refoulés forment le milieu primaire,
- dans lequel les chemins secondaires (44) sont intégrés dans le circuit de refroidissement de sorte que le milieu de refroidissement forme le milieu secondaire.
